# EUROPEAN PATENT APPLICATION

(11) **EP 4 749 386 A1**
(43) Date of publication of application: **27.05.2026**
(21) Application number: 25216142.7
(22) Date of filing: 17.11.2025
(51) Int. Cl.: G05D 16/10, B05B 1/00, F04B 1/00

(54) **VALVE ASSEMBLY FOR PUMPS**

(30) Priority: 22.11.2024 IT 202400026316
(71) Applicant: Annovi Reverberi S.p.A., 41122 Modena (IT)
(72) Inventor: RINIERI, Alessio, 41037 Mirandola (MO) (IT)
(74) Representative: AVERA-IP SRL

(57) **Abstract**

A valve assembly (35) for pumps (10) is described, comprising:
a first chamber (45) adapted to be placed in fluid communication with an inlet duct, a second chamber (50) communicating with the first chamber (45) via a first valve seat (55), the second chamber (50) being adapted to be placed in fluid communication with an outlet duct, a first shutter body (60) housed in the second chamber (50) and movable between a closed position, in which it closes the first valve seat (55), and an open position, in which it opens the first valve seat (55), a first resilient element (65) adapted to push the first shutter body (60) towards the closed position in contrast to the pressure present in the first chamber (45), an additional chamber (175) in fluid communication with the second chamber (50) via an additional valve seat (180), an additional shutter body (C) housed in the additional chamber 175, where it is movable between a closed position, in which it closes the additional valve seat (180), and an open position, in which it opens the additional valve seat (180), an additional resilient element (185) adapted to push the additional shutter body (C) towards the closed position,
wherein the additional shutter is movable, in contrast to the spring force of the additional resilient element (185), from the closed position to the open position if the pressure difference between the second chamber (50) and the additional chamber (175) is greater than a threshold value.

## Description

### TECHNICAL FIELD

The present invention concerns a valve assembly for pumps, for example for piston or plunger positive displacement pumps that can be installed on pressure washers or other machines for distributing and/or dispensing pressurized fluids (typically water).

### PRIOR ART

As is known, pumps, particularly piston or plunger positive displacement pumps, are generally provided with an intake manifold connected to a tank of the fluid to be pumped, and with a delivery manifold adapted to be connected to a fluid dispensing device, for example generally in the form of a dispensing lance or gun.

Between the delivery manifold and the dispensing device, these pumps comprise a regulating valve assembly, which is fluidly interposed between the delivery manifold and the dispensing device, in order to regulate the delivery pressure.

Conventionally, such a regulating valve assembly is fluidly connected via an inlet duct to the delivery manifold, and fluidly connected via an outlet duct, e.g. of the hose type, to a dispensing device such as a lance or gun.

The control valve assembly comprises, as is known, a first chamber communicating with the inlet duct and a second chamber communicating with the first chamber and with the outlet duct.

In the second chamber there is housed a first shutter body which, pushed by a spring, is normally adapted to cooperate with a first valve seat to close the communication between the first chamber and the second chamber.

As the flow rate of fluid being pumped into the first chamber of the valve assembly also increases, the pumped fluid pushes the first shutter body towards the open position, in contrast to the spring action, thus flowing into the second chamber and from there into the outlet duct, for example, until it is dispensed by the dispensing device

When the fluid dispensing is terminated, e.g. the dispensing lance or gun is closed, the fluid trapped in the second chamber acts on the first shutter body assisted by the spring, so as to bring it to the closed position.

In this situation, the pressure value inside the second chamber is particularly high, e.g. generally 100 bar or more.

Such high pressure is undesirable, both for safety issues and for component wear.

For this reason, what are known as reset valves are used in the industry.

Such reset valves are associated with the second chamber so that, when the fluid dispensing is prevented, they open and allow the fluid trapped in the second chamber to be discharged until the pressure inside the second chamber and in the outlet duct connected thereto is restored to 0.

However, a known drawback in the industry is that such pressure reset generates a delay in the response to the next dispensing request, e.g. the next time the trigger of the dispensing device is pulled to resume dispensing.

Moreover, as is known, in use the dispensing is interrupted and resumed several times within a limited time frame, and such continuous and large pressure fluctuations, between 0 and the dispensing pressure, which can generally be around 100 bar or more, create sudden continuous stresses that can lead to accelerated wear of the various components. In light of the foregoing, it is an aim of the present invention to overcome this/these drawback(s) of the prior art.

It is a further aim of the present invention to achieve the aforementioned objective within the scope of a simple and rational solution.

These and other aims are achieved by the features of the invention set out in the independent claims.

The dependent claims outline preferred and/or particularly advantageous aspects of the invention.

### DISCLOSURE OF THE INVENTION

In particular, the invention provides a valve assembly for pumps comprising:
- a first chamber adapted to be placed in fluid communication with an inlet duct,
- a second chamber communicating with the first chamber via a first valve seat, the second chamber being adapted to be placed in fluid communication with an outlet duct,
- a first shutter body housed in the second chamber and movable between a closed position, in which it closes the first valve seat, and an open position, in which it opens the first valve seat,
- a first resilient element adapted to push the first shutter body towards the closed position in contrast to the pressure present in the first chamber,
- an additional chamber in fluid communication with the second chamber via an additional valve seat,
- an additional shutter body housed in the additional chamber and movable between a closed position, in which it closes the first valve seat, and an open position, in which it opens the additional valve seat,
- an additional resilient element adapted to push the additional shutter body towards the closed position,
wherein the additional shutter body is movable, in contrast to the spring force of the additional resilient element, from the closed position to the open position if (the pressure in the second chamber is greater than the pressure in the additional chamber and) the pressure difference between the second chamber and the additional chamber is greater than a threshold value (and for example, is positioned in said closed position when the pressure difference between the second chamber and the additional chamber assumes said threshold value or a value less than said threshold value).

An aspect of the invention can envisage that said threshold value can be greater than the atmospheric pressure value (i.e. greater than 1 bar).

Thanks to this solution, the invention provides a valve assembly capable of determining a decrease in pressure in the second chamber whenever dispensing is terminated, while still maintaining a certain pressure value inside the chamber, so as to have a more fluid behaviour between each dispensing and non-dispensing phase.

Moreover, thanks to this solution, the stress variation of the components between the dispensing and non-dispensing phases is smaller, thus obviating large and sudden stress variations that could cause accelerated wear of the various components of the valve assembly and the components in use connected thereto.

Another aspect of the invention envisages that such a threshold value can be greater than or equal to 5 bar, for example between 6 and 70 bar (extremes included).

For example, it is possible to envisage that such a threshold value can preferably be greater than or equal to 15 bar, e.g. between 16 and 70 bar (extremes included).

Yet another aspect of the invention envisages that such a threshold value can preferably be greater than or equal to 25 bar, e.g. it can be between 26 and 70 bar extremes included (possibly between 26 and 55 bar, extremes included).

For example, another aspect of the invention envisages that, preferably, such a threshold value can be equal to or greater than 30 bar, e.g. between 30 and 70 bar (extremes included), e.g. between 31 and 70 bar (extremes included), optionally between 31 and 60 bar (extremes included), optionally for example between 30 and 55 bar (extremes included), optionally for example between 31 and 55 bar (extremes included).

For example, yet another aspect of the invention envisages that such a threshold value can be between 40 and 60 bar (extremes included), even more preferably between 45 and 55 bar (extremes included).

For example, another aspect of the invention envisages that such a threshold value can be substantially equal to a value between 40% and 60%, e.g. between 40% and 50%, of the fluid dispensing pressure value.

Still another aspect of the invention envisages that the valve assembly can comprise a third chamber in continuous (and constant) fluid communication with the second chamber, and that the additional chamber can be in fluid communication with the third chamber via said additional valve seat, and in fluid communication with the second chamber via said additional valve seat and said third chamber.

In practice, the third chamber can create a (seamless) extension of the second chamber and therefore the pressure in the second chamber and in the third chamber is the same. Another aspect of the invention provides that the valve assembly can further comprise:
- a discharge duct communicating with the first chamber via a second valve seat,
- a sliding plunger at least partially delimiting said third chamber,
- a second shutter body (rigidly) connected to the plunger and housed in the first chamber where it is movable between a closed position, in which it closes the second valve seat, and an open position, in which it opens the second valve seat, and
- a second resilient element adapted to push the second shutter body (e.g. acting on the plunger) towards the closed position in contrast to the pressure in the third chamber.

Thanks to this solution, as long as the pressure in the third chamber is not able to overcome the force exerted, for example on the plunger, by the second resilient element, the second shutter body remains in the closed position.

If, however, the flow rate of pumped fluid increases and/or if the dispensing is terminated, or for example if the dispensing device is closed, the pressure in the second chamber and in the third chamber increases, increasing the thrust exerted on the plunger in contrast to the second resilient element.

When this pressure exceeds a limit value, the second shutter body moves away from the second valve seat, opening a direct communication between the first chamber and the discharge duct.

In this way, all the fluid pumped by the pump, or at least the flow rate of excess fluid, flows through the discharge duct, for example towards the intake manifold, thereby ensuring that the pressure of the fluid at the outlet of the valve assembly never exceeds the limit value.

A further aspect of the invention envisages that said second resilient element can be a compression spring, and that the valve assembly can comprise preload means of the second resilient element, i.e. the compression spring.

Thanks to this solution, the value of the fluid dispensing pressure can be easily regulated. In fact, thanks to the preload means, it is possible to adjust the pressure limit value at which the second shutter opens, i.e. moves to the respective opening position, so that the fluid is at least partially discharged, avoiding increases in dispensing pressure beyond such a limit value.

Furthermore, a further aspect of the invention envisages that such a threshold value can be independent of the preload value of the second resilient element, i.e. the threshold value may not vary with the variation of the preload value.

Thanks to this solution, the preload value of the second resilient element can be varied without affecting the threshold value.

Another aspect of the invention envisages that said additional chamber can be in fluid (constant) and continuous communication with the first chamber.

Thanks to this solution, the pressure in the additional chamber is equal to the pressure in the first chamber.

The additional shutter body is thus movable, in contrast to the spring force of the additional resilient element, from the closed to the open position if (the pressure in the second chamber is greater than the pressure in the first chamber and) the pressure difference between the second chamber and the first chamber is greater than said threshold value. Still a further aspect of the invention envisages that the valve assembly can comprise an actuating system configured to switch off a motor actuating the pump when the pressure difference between the second chamber and the first chamber is (i.e. assumes a value) greater than a critical value, and that said critical value can be less than the threshold value.

Thanks to this solution, the valve assembly is provided with a actuating system capable of switching off the pump when the dispensing is terminated, so that no energy is wasted when dispensing is not required.

Furthermore, thanks to this solution, the valve assembly is overall configured to allow the pump motor to be switched off for the purpose described above, while at the same time lowering the pressure in the second chamber when dispensing is not required, and therefore, the second shutter is in the respective closed position to keep the valve assembly in a safer condition.

In practice, thanks to this solution which envisages that the critical value is lower than the threshold value, it is possible to decrease the pressure inside the second chamber when the dispensing is terminated, while still maintaining it at a value that guarantees the correct operation of the actuating system.

Another aspect of the invention envisages that there can be a difference of at least 1 bar between the threshold value and the critical value, e.g. a difference preferably between 2 and 40 bar, e.g. a difference of at least 10 bar, e.g. a difference even more preferably between 10 and 35 bar (extremes included).

A further aspect of the invention envisages that said critical value can be between 1 bar and 25 bar (extremes included), for example preferably between 15 bar and 25 bar (extremes included).

Yet another aspect of the invention envisages that the valve assembly can comprise a fourth chamber in fluid (continuous and constant) communication with the second chamber, for example via the third chamber, and that the actuating system can comprise:
- an actuating rod slidably movable within a coupling duct where said fourth chamber remains defined between a rest position (in which it is adapted to not interact with a switch for switching off the motor actuating the pump) and a trigger position in which it is adapted to actuate a switch for switching off the motor of the pump, and
- a spring element configured to push the actuating rod into the rest position in contrast to the pressure in the fourth chamber.

Thanks to this solution, the architecture of the actuating system and overall valve assembly is particularly effective.

In particular, it is possible to envisage that in the rest position the fourth chamber can have a first volume, and that in the trigger position the fourth chamber can have a second volume greater than the first volume.

A further aspect of the invention envisages that the valve assembly can comprise a fifth chamber in fluid (constant and continuous) communication with the first chamber, and that said actuating rod (possibly assisted by a sealing gasket) is adapted to separate (in a watertight manner) the fourth chamber and the fifth chamber.

Thanks to this solution, the actuating rod is movable from the rest position to the trigger position if the pressure in the second chamber, and thus in the fourth chamber, is greater than the pressure in the first chamber, and thus in the fifth chamber, and the pressure difference between the second chamber and the first chamber (i.e. between the fourth chamber and the fifth chamber) is greater than said critical value.

Another aspect of the invention envisages that said additional chamber can be at least partially made in the plunger, for example by a section of an inner channel made in the plunger itself.

Thanks to this solution, the size of the valve assembly is minimised overall.

Yet another aspect of the invention envisages that said additional chamber can also be at least partially made in the second shutter body.

Thanks to this, the structure of the valve assembly is particularly rational in order to limit the size.

Yet another aspect of the invention envisages that the additional chamber can also have an outlet port by means of which it is in fluid communication with the first chamber, made in the second shutter body.

The invention further provides a pump, e.g. preferably a positive displacement pump, provided with a valve assembly according to one or more (possibly all) of the aspects described above.

Another aspect of the invention envisages that said pump, for example said positive displacement pump, can comprise:
- a pump body, defining one or more cylinders, and a cylinder head, attached to the pump body and adapted to close one end of each cylinder, with a reciprocating piston being slidably housed inside each cylinder,
- an intake manifold adapted to be connected to a source of fluid to be pumped,
- a delivery manifold adapted to be connected to a pumped fluid dispensing device,
- a motor actuating said one or more reciprocating pistons,
- the valve assembly being connected (in particular via the first chamber) to the delivery manifold (and for example adapted to be interposed between it and a dispensing device of the pumped fluid, e.g. a lance or gun) to receive fluid therefrom.

With such a solution, the invention provides a positive displacement pump that selectively enables the dispensing of a pressurised fluid, which is particularly safe and whose behaviour is more predictable and fluid between the various dispensing and non-dispensing phases, and whose components are overall more durable thanks to less abrupt stress changes between the dispensing and non-dispensing phases.

The invention further provides a pressure washer comprising:
- a pump as described above, and
- a dispensing device fluidly connected to the second chamber of the valve assembly to receive fluid therefrom.

A further aspect of the invention, possibly independently protectable in its own right, provides a valve assembly for pumps (i.e. for a pump) comprising:
- a first chamber adapted to be placed in fluid communication with an inlet duct,
- a second chamber communicating with the first chamber via a first valve seat, the second chamber being adapted to be placed in fluid communication with an outlet duct,
- a first shutter body housed in the second chamber and movable between a closed position, in which it closes the first valve seat, and an open position, in which it opens the first valve seat,
- a first resilient element adapted to push the first shutter body towards the closed position in contrast to the pressure present in the first chamber,
- an additional chamber in fluid communication with the second chamber via an additional valve seat,
- an additional shutter body housed in the additional chamber and movable between a closed position, in which it closes the first valve seat, and an open position, in which it opens the additional valve seat,
- an additional resilient element adapted to push the additional shutter body towards the closed position, wherein the additional shutter body is movable, in contrast to the spring force of the additional resilient element, from the closed position to the open position if (the pressure in the second chamber is greater than the pressure in the additional chamber and) the pressure difference between the second chamber and the additional chamber is greater than a threshold value (and for example, is positioned in said closed position when the pressure difference between the second chamber and the additional chamber assumes said threshold value or possible a value less than said threshold value), and
- an actuating system configured to switch off a motor actuating the pump when the pressure difference between the second chamber and the first chamber is (i.e. assumes a value) greater than or equal to a critical value, where said critical value can be less than the threshold value.

Another aspect of the invention envisages that said additional chamber can be in constant and continuous fluid communication with the first chamber.

Thanks to this solution, the additional chamber and the first chamber are found to have the same pressure, therefore the shutter is movable, in contrast to the spring force of the additional resilient element, from the closed position to the open position if the pressure in the second chamber is greater than the pressure in the first chamber and the pressure difference between the second chamber and the first chamber is greater than a threshold value, while it is positioned in the closed position when the pressure difference between the second chamber and the first chamber assumes said threshold value.

### BRIEF DESCRIPTION OF THE DRAWINGS

Further features and advantages of the invention will be more apparent after reading the following description provided by way of non-limiting example, with the aid of the figures illustrated in the accompanying drawings.

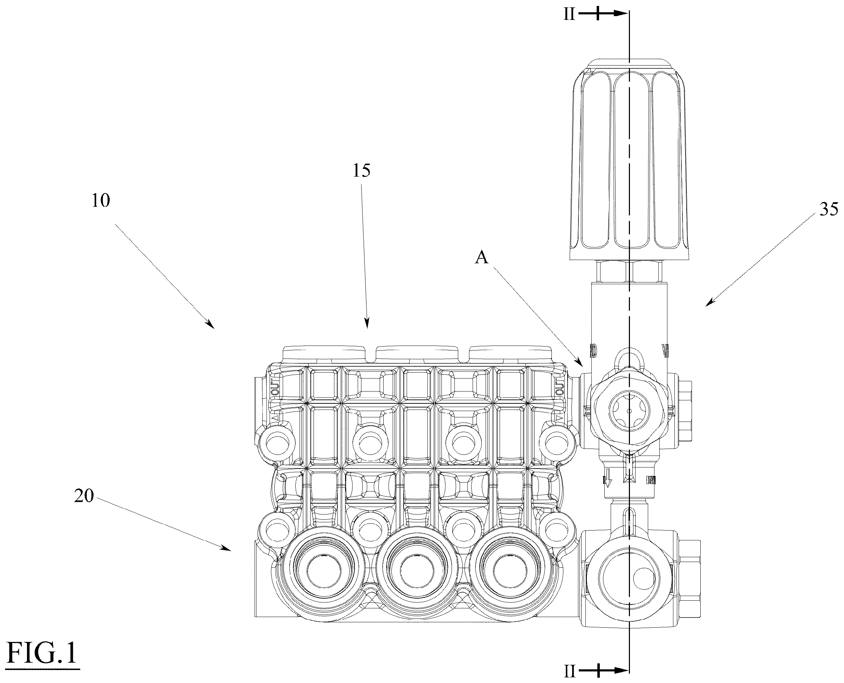

Figure 1 is a view of a pump provided with a valve assembly according to the invention.
Figure 2 is a cross-sectional view along the line II-II of Figure 1 of the valve assembly, and an enlargement in which an additional shutter body in a respective closed position is better visible.
Figure 3 is a view of Figure 2 in a subsequent phase, in particular of dispensing, in which a first shutter body is in a respective open position and the additional shutter body is in a respective closed position with a switch and motor also schematically illustrated, and an enlargement better showing said closed position of the additional shutter body.
Figure 4 is a view of Figure 3 in a subsequent operating phase in which the first shutter body has moved to a respective closed position and the additional shutter body has moved to a respective open position, and an enlargement in which said positioning can be better appreciated.
Figure 5 is a view of Figure 4 at a still more subsequent operating phase in which the additional shutter body has returned to the respective closed position and an enlargement in which said positioning is more clearly visible.
Figure 6 is an enlarged view of the portion VI of Figure 2.
Figure 7 is a schematic view in which the section of the valve assembly of Figure 2-5 with an outlet duct and a dispensing device connected to the valve assembly is visible.

### BEST MODE TO IMPLEMENT THE INVENTION

With particular reference to these figures, a pump, for example particularly a positive displacement piston pump 10 or a plunger pump, which can be installed for example on a pressure washer or on another machine or system for distributing and/or dispensing pressurized fluids (typically water), is indicated globally with reference 10.

The pump 10 comprises a pump body 15, defining one or more cylinders, and a head 20, fixed to the pump body 15 and adapted to close one end of each cylinder.

An reciprocating piston, which is adapted to define, together with the corresponding cylinder and the head 20, a respective variable volume compression chamber, is slidably received within each cylinder.

The pistons can therefore be (kinematically) connected to a single transmission shaft through respective kinematics, for example a crank-rod kinematics, which is adapted to transform the rotary movement of the transmission shaft into a reciprocating linear movement of the piston.

The transmission shaft can be rotated by an actuating motor M (illustrated only schematically), for example by an electric motor or alternatively by an internal combustion engine. The cylinders, pistons, compression chambers and the transmission shaft are not illustrated or visible in the figures since they are known and conventional in themselves. The pump 10 comprises an intake manifold 25 and a delivery manifold 30, both of which can be made in the head 20.

For example, each compression chamber can be connected to the intake manifold 25 through a respective intake valve and to the delivery manifold 30 through a respective delivery valve.

The intake and delivery valves can be automatic valves and are conventional in themselves.

The intake manifold 25 can be connected to a source of fluid to be pumped, for example to a tank containing the fluid or alternatively to a fluid supply network (for example the water network), while the delivery manifold 30 can be connected to a dispensing device G, for example to a dispensing gun or lance.

Obviously, the type of dispensing device G is not limited to those listed above but can vary depending on the application, i.e. the machine or plant or other system, on which the pump 10 is installed.

The dispensing device G can be provided with special valve members, which can for example be controlled by means of a trigger or button, adapted to selectively open and close the fluid dispensing following a manual actuation.

A valve assembly, indicated globally by reference numeral 35, can be fluidly (e.g. hydraulically) interposed between the delivery manifold 30 and the dispensing device G.

The valve assembly 35 can first comprise a rigid (e.g. metallic) valve body 40 defining a space for receiving the fluid and for it to flow which arrives from the delivery manifold 30. The valve body 40 defines a cavity within which is received and flows the fluid received from the delivery manifold.

For example, the valve body 40 can be substantially defined by a tubular joint or body that is multi-way, e.g. Three-way or four-way or more, having an internal cavity within which the fluid is received and flows in the manners that will become clearer hereinafter. The valve assembly 35 has a first chamber 45, for example defined in the valve body 40, which is adapted to be placed in fluid communication with an inlet duct A for receiving said fluid from the delivery manifold 30.

In particular, the first chamber 45 can be in constant hydraulic communication with the delivery manifold 30 via said inlet duct A which is for example fluidly (sealingly) connected to the valve body 40 (for example directly connected to a respective one of said ways thereof).

The first chamber 45 is thus adapted to receive the fluid arriving from the delivery manifold of the pump.

In the illustrated embodiment, the inlet duct A can coincide with (i.e. be made available by) an end section of the delivery manifold 30.

The valve assembly 35 further comprises a second chamber 50, for example defined in the valve body 40, which is in fluid (e.g. hydraulic) communication with the first chamber 45 via a first valve seat 55.

It should be specified that, within the scope of the present description, valve seat generically means any passage, opening or hole, of any shape and size, which is adapted to place two separate volumes in fluid, i.e. hydraulic, communication and is adapted to be obstructed by a corresponding shutter body, to selectively prevent such communication. Inside the second chamber 50 a first shutter body 60 is housed, which is movable between a closed position, in which it closes the first valve seat 55 preventing communication between the first chamber 45 and the second chamber 50, and an open position, in which it opens the first valve seat 55 allowing communication between said first chamber 45 and said second chamber 50.

The first shutter body 60 can be constantly pushed towards the closed position by a first resilient element 65, for example by a spring, which acts in contrast with the pressure of the fluid in the first chamber 45.

The second chamber 50 is adapted to be placed in fluid communication with an outlet duct B which can be adapted to be connected for example to the dispensing device G, e.g. said dispensing lance or gun, for dispensing the fluid.

The valve assembly 35 can comprise, possibly, a coupling sleeve 70 (or delivery sleeve), which is adapted to place the second chamber 50 in fluid communication with the outlet duct B.

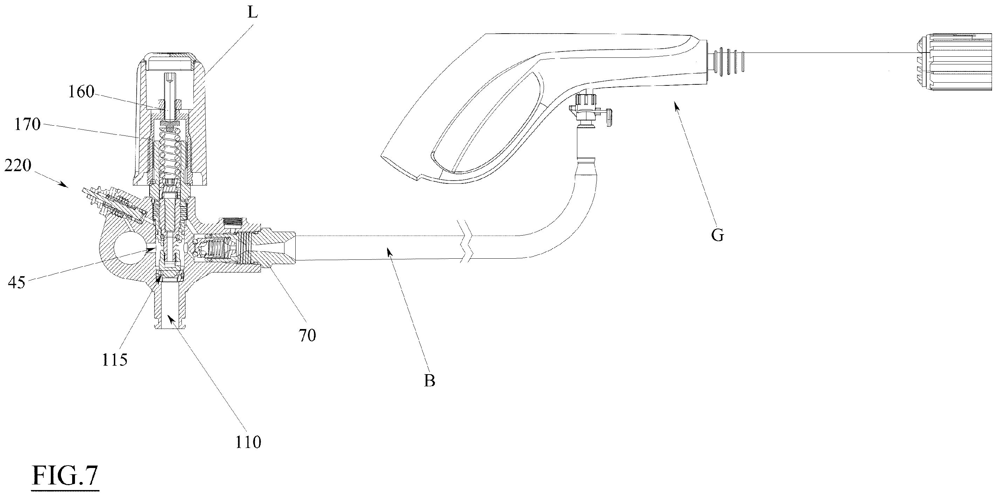

In particular, as for example depicted in Figure 7, the coupling sleeve 70 can be adapted to be interposed between said second chamber 50 and the outlet duct B to place them in fluid communication.

The coupling sleeve 70 can have an annular sleeve, that is, closed onto itself in a loop, around a central axis that delimits an internal cavity 75 extending along said central axis. The coupling sleeve 70 can close the second chamber 50 at one end.

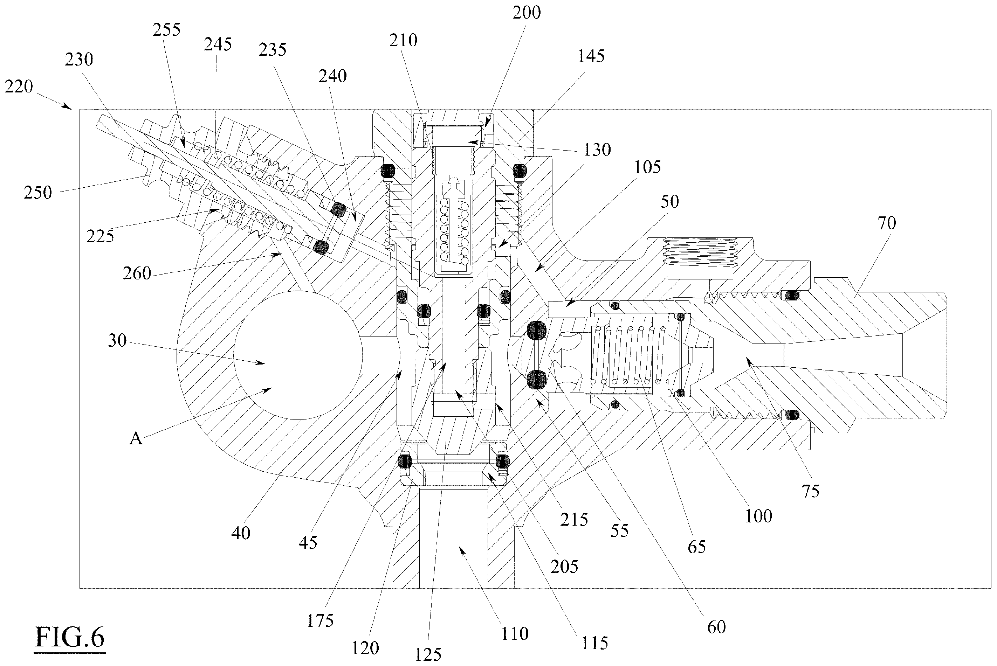

In particular, as better visible in Figure 6, the coupling sleeve 70 can be rigidly fixed (for example screwed) to the valve body 40 (for example directly connected to a respective one of said ways thereof), in correspondence of the second chamber 50.

In particular, as better visible in such Figure 6, the coupling sleeve 70 can have a first portion that extends inside the second chamber 50, and a second portion that (closes the second chamber 50 and) protrudes partially outside the second chamber itself, for example outside the valve body 40, to which the outlet duct B (and therefore, by means of it, the dispensing device G) is adapted to be fluidly connected in a sealing manner.

For example, the internal cavity 75 of the coupling sleeve 70 can be adapted to be placed in (continuous and constant) fluid communication with said outlet duct B.

For example, the second chamber 50 can therefore be adapted to be placed in fluid communication with said outlet duct B via the internal cavity of the coupling sleeve 70.

The first resilient element 65 can be comprised (i.e. interposed) and compressed between the coupling sleeve 70 and the first shutter body 60, for example partially contained in the internal cavity 75 of the latter.

In particular, as better visible in Figure 6, the first resilient element 65 (i.e. said spring) can be inserted within the internal cavity 75 of the coupling sleeve 70 and placed in abutment on an abutment surface 100 provided therein, for example made available by an annular body inserted within the internal cavity 75 of the coupling sleeve 70 and fixed therein, substantially defining an internal shoulder defining an axial narrowing of the internal cavity 75 of the coupling sleeve 70.

In more detail, the first shutter body 60 can generically have the shape of a cup, the mouth of which can preferably be threaded in the coupling sleeve 70, or inside the internal cavity 75 thereof, and slides while remaining (preferably in each position) at least partially peripherally wrapped (preferably with reduced clearance) by the coupling sleeve 70 (or at least partially inserted within the central cavity 75 thereof) during the movement between the closed position and the open position.

The first shutter body 60 can then have a plurality of communication ports, e.g. formed in a pass-through manner onthe annular wall of the cup-shaped body of the first shutter body 60, by means of which the internal cavity of the first shutter body 60 (and the internal cavity of the coupling sleeve 70) is in fluid communication with the second chamber 50. The internal cavity defined by the cup-shaped body of the first shutter body 60 is, therefore, in fluid communication with the internal cavity 75 of the coupling sleeve 75 (and through this adapted to be placed in fluid communication with the outlet duct B and the dispensing device G).

A sealing gasket G, which is fitted onto the (cup-shaped) body of the first shutter body 60 and preferably partially inserted in an annular groove made thereon, can be associated with the first shutter body 60.

Such sealing gasket is in particular intended to ensure the fluid seal when the first shutter body 60 is in the closed position.

In an alternative not illustrated it is possible to envisage that the first shutter body 60 can be devoid of communication ports adapted to place the second chamber in fluid communication with the internal cavity 75 of the coupling sleeve (in order to fluidly connect the second chamber 50 with the outlet duct B), and that the coupling sleeve 70 can comprise at least one passage duct (for example, a plurality of passage ducts each of which is) passing through an annular sleeve of the coupling sleeve in a transverse direction with respect to a central axis thereof and opening into the internal cavity 75 to place the second chamber 50 in fluid communication with the internal cavity 75 to (i.e. adapted to) place the second chamber 50 in fluid communication with the outlet duct B.

The valve assembly 35 can further comprise a discharge duct 110, which is in fluid communication with the first chamber 45 via a second valve seat 115.

The discharge duct 110 can be made (at least partially) in the same body in which the first chamber 45 is made, for example in the valve body 40.

Preferably, the discharge duct 110 is adapted to place the first chamber 45 in communication with the intake manifold 25 of the pump 10 (for example by means of a respective one of said ways of the shutter body 40 which is connected to the intake manifold 25). However, it is not excluded that, in other embodiments, the discharge duct 110 can place the first chamber 45 in communication with other low pressure volumes, for example with the tank of the liquid to be pumped.

For example, as better visible in Figure 6, the second valve seat 115 can be made by a separate annular body 120 that is inserted within the first chamber 45, possibly with the interposition of special sealing gaskets and fixed within the valve body 40.

Within the first chamber 45 there is housed a second shutter body 125, which is movable between a closed position, in which it closes the second valve seat 115 preventing communication between the first chamber 45 and the discharge duct 110, and an open position, in which it opens the second valve seat 115, allowing such communication.

The valve assembly 35 further comprises a third chamber 130, separated from the first chamber 45 and in constant (and continuous) fluid (i.e. hydraulic) communication with the second chamber 50.

For example, the third chamber 130 and the second chamber 50 can be in fluid communication with each other via a connection duct 135.

Said connection duct 135 can be obtained (at least partially) in the valve body 40 itself. The connection duct 135, in particular, opens at one end onto the second chamber 50 and at the opposite end onto the third chamber 130.

The third chamber 130 essentially defines an extension of the second chamber 50, being in constant fluid communication therewith.

Since the third chamber 130 and the second chamber 50 are in (constant and) continuous fluid communication, the pressure inside said (second and third) chambers is the same. The third chamber 130 is partially delimited by a sliding plunger 140, which is rigidly fixed to the second shutter body 125 so that the pressure of the fluid in the third chamber 130 tends to shift the second shutter body 125 towards the open position of the second valve seat and thus of the communication between the first chamber 45 and the discharge duct 110.

In more detail, the plunger 140 can be slidably received inside a cylinder 145 inserted within the valve body 40 and rigidly fixed thereto (for example inserted in a respective one of said ways of the valve body 40 and fixed at the same), and said cylinder 145 is provided with a bottom wall which separates the first chamber 45 from the third chamber 130.

In the illustrated example, the cylinder 145 is made in a separate body with respect to the body in which the first chamber 45 is made, in this case with respect to the valve body 40, and can be rigidly joined (i.e. fixed) to the latter, for example, by means of a threaded connection and preferably with the interposition of special sealing gaskets.

In particular, the plunger 140 can have a shoulder 140A which closes the third chamber 130 at the top, i.e. in an opposite position with respect to the first chamber 45.

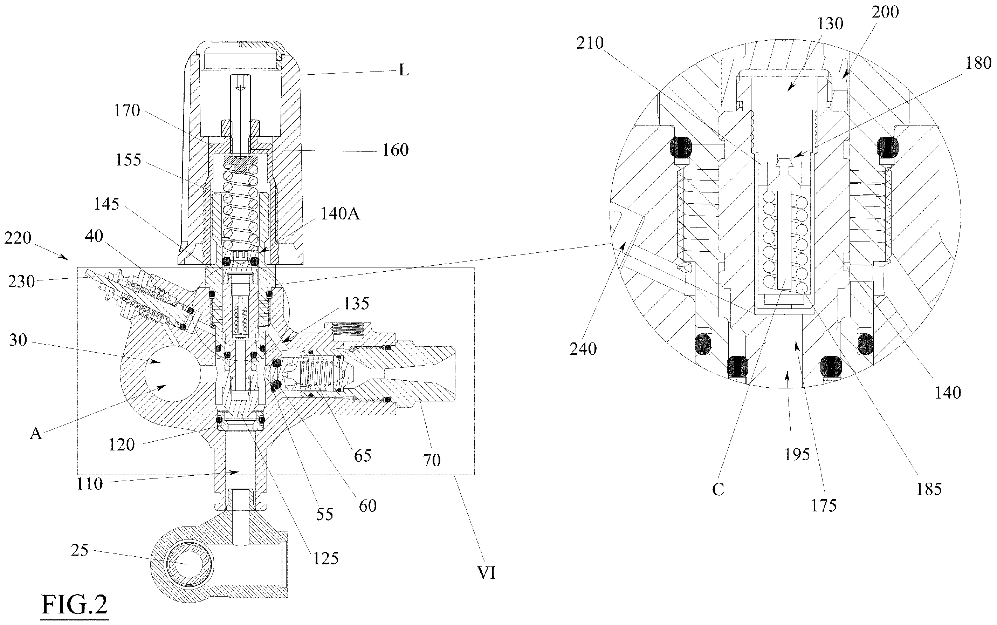

For example, as better visible in Figure 2, such a shoulder 140A can be inserted to size within the cylinder 145 and from said shoulder 140A a neck (i.e. a cylindrical section defining a narrowing) of the plunger 140 starts off (i.e. develops) which is wrapped by one or more sealing gaskets which ensure the fluid seal, thus guaranteeing the fluid seal inside the third chamber 135.

As can be deduced from the accompanying figures, the plunger 140 can be made in several parts, e.g. two in number, which are then constrained to each other (e.g. screwed together or mutually connected by means of interference shape coupling or otherwise) to make the overall development of the plunger 140 available.

For example, with reference to the accompanying figures, the plunger 140 can have an upper part which makes said shoulder and said collar available and a lower part which, for example, makes a greater portion of the overall extension of the plunger available, and said upper part and said lower part are (mutually) fixed (e.g. removably) and integral in movement to each other.

The connection duct 135 can therefore open onto the third chamber 130 via a communication port made (e.g. as a through hole) in the cylinder 145.

The second shutter body 125 can be rigidly connected to the plunger 140 at one end thereof arranged at the first chamber 45.

In particular, the plunger 140 slidably fits into a through hole obtained in the bottom wall of the cylinder 145, to which one or more sealing gaskets are preferably associated, adapted to ensure that the first chamber 45 and the third chamber 130 remain hermetically separated, so that they open inside the first chamber 45.

In particular, it is possible that the plunger 140 can be connected to the second shutter body 125 in a removable manner, for example by means of a threaded connection.

In more detail, the second shutter body 125 can generically have the form of a cup-shaped body, a mouth (for access to a cavity defined by said cup-shaped body) of which is fixed (in a fluid-tight manner), e.g. screwed to the plunger 140 (e.g. at said plunger end received in the first chamber 45).

The third chamber 130 can therefore be effectively delimited between the plunger 140 and cylinder 145.

For example, the third chamber 130 is closed at the top by said shoulder of the plunger 140, at the bottom by the cylinder bottom wall and the plunger 140 inserted into the through-hole (with sealing gaskets) in the bottom wall of the cylinder 145.

Between the shoulder and the bottom wall of the cylinder 145 (i.e. in the space that passes between them), the plunger 140 can be inserted with clearance inside the cylinder 145, i.e. so that a gap remains defined between the two, so that it is at least partially surrounded by the third chamber 130.

Such clearance is not visible in the accompanying figures.

The valve assembly 35 then comprises a second resilient element 155, for example a spring (particularly a compression spring), which is adapted to push the second shutter body 125 towards the closed position of the second valve seat 115 and therefore of the discharge duct 110.

In particular, such a second resilient element 155 (i.e. said spring, for example said compression spring) is configured to push the second shutter body towards (and possibly into) the closed position in contrast to the pressure present in the third chamber 130.

In particular, the valve assembly 30, for example, as will become clear hereinafter, can comprise means for regulating the preload of the second resilient element 155, i.e. the compression spring.

In the illustrated example, this second resilient element 155 is positioned on the opposite side of the plunger 140 with respect to the second shutter body 125, and outside the third chamber 130.

In particular, the second resilient element 155 can be partially received in the cylinder 145 and be interposed between the plunger 140, or said shoulder 140A thereof, and an abutment element 160 rigidly connected to the cylinder 145.

Such an abutment element 160, for example visible in Figure 2, can be shaped as a pin (for example coaxial to the plunger 140), and can be rigidly fixed to a connection body 170, which can in turn be fixed on the cylinder 145, for example screwed thereto.

For example, the second resilient element 155 as better visible in Figure 2 lies on (i.e. is placed in abutment on) said abutment element 160 by means of the interposition of a plate.

In more detail, the abutment element 160 can be coupled to the connection body 170 by means of a threaded connection, in such a way that, by screwing or unscrewing the abutment element 160 with respect to the connection body 170, it is possible to cause an axial displacement of the abutment element 160 in the sliding direction of the plunger 140, varying the pre-compression of the second resilient element 155 and, therefore, the force with which the second shutter body 125 is pushed towards the closed position.

The connection body 170 can in turn be coupled to an external protection cover L, for example by means of a coupling with male hexagon-female hexagon shape, such as to be integral in screwing/unscrewing thereto.

Said abutment element 160 and said connection body 170 (with said cover L) can then provide said means for regulating the preload of the second resilient element 155, i.e. said (compression) spring.

Thanks to such means for regulating the preload of the second resilient element 155, it is possible to regulate, in essence, a limit pressure value in the second chamber 50 (and thus in the third chamber 130 which is in constant fluid communication with the second chamber 50) beyond which the second shutter body 125 (connected to the plunger 140), in contrast to the force of the second resilient element 155, moves from the respective closed position to an open position, opening the communication between the first chamber 45 and the discharge duct 110.

Furthermore, the valve assembly 35 comprises an additional chamber 175 which can be placed in fluid communication, e.g. direct or indirect, with the second chamber 50 via an additional valve seat 180.

Therefore, the valve assembly 35 can comprise an additional shutter body C which is housed in the additional chamber 175 where it is movable between a respective closed position, in which it closes the additional valve seat 180 (preventing fluid communication through it), and a respective open position, in which it opens the additional valve seat 180 (allowing fluid communication through it).

The additional shutter body C, in the closed position, can thus prevent fluid communication, e.g. direct or indirect, between the additional chamber 175 and the second chamber 50, while in the open position it can permit such fluid communication, e.g. direct or indirect, between the additional chamber 175 and the second chamber 50.

The shape of the additional shutter body C, i.e. the portion thereof adapted to close the additional valve seat, can be any shape, e.g. it can have a conical, truncated cone or spherical shape or any other shape as long as it is suitable for the purpose of, in the closed position, closing the additional valve seat (so as to prevent fluid communication through it).

As better visible in the enlargement of Figure 6, the additional chamber 175 can be in fluid communication with the second chamber 50 via the third chamber 130, i.e. via the additional valve seat 180 and via the third chamber 130.

In more detail, by means of the additional valve seat 180, the additional chamber 175 can be in fluid communication (direct) with the third chamber 130 and thus in fluid communication (indirect, i.e. with the interposition of the third chamber 130) with the second chamber 50.

In such a case, for example, the additional shutter body C, in the closed position can prevent fluid communication between the additional chamber 175 and the third chamber 130, thereby preventing fluid communication between the additional chamber 175 and the second chamber 50, while in the open position it can allow such fluid communication between the additional chamber 175 and the third chamber 130, thereby allowing fluid communication between the additional chamber 175 and the second chamber 50.

However, it is not excluded that in other embodiments not illustrated, the additional valve seat 180 can be interposed directly between the second chamber 50 and the additional chamber 175.

The additional chamber 175 can also be in fluid communication (i.e. direct and preferably constant and continuous) with the first chamber 45.

The valve assembly 35 then comprises an additional resilient element 185 (e.g. housed in the additional chamber and) adapted to push the additional shutter body C towards the closed position.

In particular, it is possible to envisage that the additional shutter body C is positioned (pushed by the additional resilient element 185) in the closed position if the pressure difference between upstream and downstream of the additional shutter body itself (considering the additional chamber 175 downstream) is less than or equal to a threshold value, while it is positioned in the open position if the pressure upstream of the additional shutter body C is greater than the pressure downstream of the additional shutter body C and the pressure difference assumes a value greater than said threshold value.

In other words, the additional shutter body C is positioned (pushed by the additional resilient element 185) in the closed position if the pressure difference between the second chamber 50 and the additional chamber 175, or for example between the third chamber 130 (which is in constant communication with the first chamber and therefore at the same pressure) and the additional chamber 180 is less than or equal to a threshold value, while it is positioned in the open position if the pressure in the second chamber 50 (i.e. the pressure in the third chamber 130) is greater than the pressure in the additional chamber 175 and the pressure difference assumes a value greater than said threshold value.

Such an additional shutter body C can remain in the closed position, as will become clearer hereinafter, pushed by the additional resilient element 185, as long as the first shutter body 60 is in the open position for dispensing fluid (e.g. by the dispensing device G).

When the dispensing is instead terminated, i.e. when the first shutter body 60 moves to the closed position, the fluid that is not dispensed causes a rise in the pressure value in the second chamber 50 (and likewise in the third chamber 130 in constant fluid communication therewith).

In such a situation, with the first shutter body 60 in the respective closed position, the additional shutter body C is positioned, in contrast to the additional resilient element 185, in the open position when the pressure difference between (upstream and downstream of the additional shutter body C, considering the additional chamber downstream, i.e., between) the second chamber 50 and the additional chamber 175 (i.e., for example, between the third chamber 130 and the additional chamber 180) is above said threshold value, i.e., when the pressure in the second chamber 50 (i.e., in the third chamber 130) is greater than the pressure in the additional chamber 175 and the pressure difference between the second chamber 50 (i.e., the third chamber 130) and the additional chamber 175 is greater than said threshold value.

Thereby, some of the fluid discharges from the second chamber 50 (passing from the third chamber 130) into the additional chamber 175, causing a decrease in the pressure value in the second chamber 50 (and likewise in the third chamber 130).

When the pressure difference between (upstream and downstream of the additional shutter body C, i.e. between) the second chamber 50 (i.e. the third chamber 130) and the additional chamber 175 returns to the threshold value, the additional shutter body C returns from the open position to the closed position (and remains in said position), pushed by the additional resilient element 185.

In practice, the force exerted by the additional resilient element 185 on the additional shutter body C when the latter is in the closed position is such that it equals the threshold value.

When, however, the pressure in the second chamber 50 (i.e. in the third chamber) is greater than the pressure in the additional chamber 175 and the pressure difference between the second chamber 50 (i.e. the third chamber 130) and the additional chamber 175 rises above the threshold value, this overcomes the spring force of the additional resilient element 185, pushing the additional shutter body C from the closed position to the (i.e. Into an) open position.

Preferably, the additional chamber 175 can be in continuous (and constant) fluid communication with the first chamber 45.

Therefore, in use, the pressure in the additional chamber 175 is equal to the pressure in the first chamber 45.

In this case, the additional shutter body C can be positioned in the closed position if the difference in (value of) pressure between the second chamber 50 (i.e. the third chamber 130) and the first chamber 45 (in this order) is equal to or less than the threshold value, or in the open position if the difference in (value of) pressure between the second chamber 50 (i.e. the third chamber 130) and the first chamber 45 (in this order) is (i.e. assumes a value) greater than the threshold value (i.e. if the pressure in the second chamber 50, and thus likewise in the third chamber 130, is greater than the pressure in the first chamber 45 and the pressure difference is greater than the threshold value).

Such a threshold value is greater than atmospheric pressure, i.e. greater than 1 bar.

Preferably, such a threshold value can be higher than 5 bar, e.g. between 6 and 70 bar. In particular, such a threshold value can preferably be greater than 15 bar, e.g. be greater than 25 bar, e.g. be between 26 bar and 70 bar (extremes included), preferably be greater than or equal to 30 bar, e.g. be between 31 and 70 bar (extremes included).

For example, such a threshold value can preferably be between 31 and 60 bar (extremes included), even more preferably between 40 bar and 60 bar (extremes included), even more preferably between 45 bar and 55 bar (extremes included), for example such a threshold value can be substantially 50 bar.

For example, such a threshold value can be basically equal to a value between 40% and 60% of a pressure limit value for dispensing fluid (e.g. by the dispensing device G).

Such a pressure limit value identifies a pressure value in the second chamber, and thus in the third chamber, above which the second shutter body 125 moves to an open position so that at least part of the fluid can be discharged into the discharge duct 110.

Again, such a threshold value can be independent of the preload value of the second resilient element 155, i.e. the threshold value does not vary with the variation of the preload of the second resilient element 155.

Such an additional chamber 175, as better visible in Figure 6, can be at least partially made inside the plunger 140.

For example, the additional chamber 175 can be at least partially made in the plunger 140 and at least partially made in the second shutter body 125.

In particular, the plunger 140 can comprise (i.e. have) an internal channel 195, which has a (preferably single) inlet port 200, for example made as a through hole in the annular body 190 of the plunger, by means of which it is in fluid (continuous) communication with (a portion of) the third chamber and a (preferably single) outlet port 205 which opens at the second shutter body 125.

In practice, such an internal channel 195 of the plunger 140 opens via said discharge port 205 into the cavity defined by the cup-shaped body of the second shutter body 125 fixed to the plunger itself.

Such an internal channel 195 of the plunger thus makes a portion of the third chamber 130 available, which is, for example, in communication with the rest of the third chamber 130 via said inlet port 200, and (at least) partially (i.e. a portion of) the additional chamber 175.

Said additional valve seat 180 separating the third chamber from the additional chamber 175 is provided inside the internal channel 195 of the plunger.

For example, said additional valve seat 180 can be made directly on the plunger 140, for example in the form of a shoulder made in the internal channel 195 defining an axial narrowing thereof, or, as visible in the accompanying figures, it can be made available by a valve body 210 (e.g. hollow, i.e. provided with a through cavity) which is distinct from the plunger and inserted therein, preferably fixed thereto (e.g. screwed), i.e. inserted in the internal channel 195.

In practice, for example, it is possible to envisage that said valve body 210, i.e. said through cavity of the valve body 210, can make a section of a flow path available for the fluid along the internal channel 195 of the plunger 195, and that said additional valve seat can be arranged along the through cavity of the valve body 210, i.e. defined by a shoulder provided in the through cavity to define an axial (localised) narrowing thereof.

The additional resilient element 185, e.g. said spring, is interposed (and compressed) between the additional shutter body C, i.e. an abutment surface made available therefrom, and an abutment surface arranged in the internal channel 195 of the plunger 140 so as to push the additional shutter body C towards the respective closed position.

For example, said abutment surface can be made directly in the plunger 140, e.g. from a shoulder made in the internal channel 195 of the plunger, or, as illustrated, it can be made available by said valve body 210 inserted and fixed in the internal channel 195 of the plunger 140 (or, for example, be made available by another, preferably localised, axial narrowing of the through cavity of the valve body 210).

In practice, the valve assembly 30 can optionally comprise said valve body 210 which makes said additional valve seat available, the additional shutter body C and the additional resilient element are inserted inside the valve body 210 (i.e. in its through cavity), and said valve body is inserted inside the plunger 140, i.e., in the internal channel 195 thereof (e.g., with the through cavity of the valve body 210 which, downstream of the additional valve seat 180, i.e., in a position opposite the third chamber, opens onto the internal channel of the plunger).

The additional chamber 175 comprises (e.g. substantially in a position opposite the additional valve seat 180) an outlet port 215 by means of which it is in fluid communication (direct and preferably continuous) with the first chamber 45.

For example, such an outlet port 215 can be made in the second shutter body 125 (and, for example, places in fluid communication, e.g. direct, the cavity defined by the cup-shaped body thereof with the first chamber).

In practice, such an additional chamber 175 comprises a first section made in the plunger 140, i.e. made available by a section of said internal channel 195 of the plunger 140 (which, for example, can possibly be made partially available by the through cavity of the valve body 210), and a second section contiguous to the first section and in fluid (continuous) sealed communication therewith, made in the second shutter body 125 and, for example, substantially defined by the cavity made (i.e. made available) by the cup-shaped body of the second shutter body 125.

Such an outlet port 215 of the additional chamber 175 can then be made by a through-hole made in the second shutter body 125, and which places the additional chamber 175 in communication (exclusively) with the first chamber 45.

It is not excluded, however, that in other, non-illustrated embodiments the additional chamber 175 can optionally be defined (solely or entirely) in the plunger 140, i.e. that it can be made available by (a section of) said internal channel, and that said outlet port 215 can be made in the plunger (at the first chamber 45).

The valve assembly further comprises an actuating system 220 adapted to selectively switch off said motor M actuating the pump 10.

In particular, as will become clear hereinafter, the actuating system 220 can be configured to switch off said motor actuating the pump 10 when the pressure in the second chamber 50 (i.e., the pressure value in the second chamber) is greater than the pressure in the first chamber 45 (i.e., the pressure value in the first chamber) and the pressure difference between the second chamber 50 and the first chamber 45 is (i.e., assumes a value) greater than or equal to a critical value.

Such a critical value is lower than the threshold value.

For example, a difference of at least 1 bar can be envisaged between the threshold value and the critical value, e.g. a difference preferably between 2 and 40 bar, e.g. a difference of at least 10 bar, e.g. a difference even more preferably between 10 and 35 bar (extremes included).

For example, it is possible to envisage that said critical value could have a value between 1 bar and 25 bar (extremes included), for example between 15 bar and 30 bar (extremes included), even more preferably between 15 bar and 25 bar (extremes included).

As, for example, better visible in Figure 6, the valve assembly 35 comprises a coupling duct 225, for example made particularly available by the valve body 40 or by one of said ways thereof, and said actuating system 230 is at least partially received in said coupling duct 225.

The actuating system 220 comprises a actuating rod 230 slidably movable within said coupling duct 225 between a rest position, in which it does not interact with a switch S for switching off the motor M actuating the pump 10 (the switch S and the motor M being illustrated only schematically in the accompanying figures), and a trigger position in which it is adapted to actuate (i.e., press on) said switch S for switching off the motor M actuating the pump 10 (so as to switch off the actuating motor itself).

In particular, the actuating rod 230 comprises a first axial end inserted inside the coupling duct 225 on which a sealing gasket 235 is provided, such that the actuating rod 230 (fluid) sealingly slides inside the coupling duct 225 between the rest position and the trigger position.

A second axial end of the actuating rod 230 exits from the coupling duct 225 and is adapted to contact said switch S for switching off when the actuating rod 230 is in the trigger position.

The first axial end of the actuating rod 230 provided with said annular sealing gasket 235 closes inside the coupling duct 225 a fourth chamber 240, which remains defined between said first axial end of the actuating rod (with the sealing gasket 235) and an axial end of the coupling duct 225 opposite that from which the actuating rod 230 exits, which is in continuous and constant fluid communication with the third chamber (and therefore with the second chamber 50, for example via a duct obtained in the tubular body 40 which places the fourth chamber 240 in continuous fluid communication with the third chamber 130).

The actuating system 230 then comprises a spring element 245 configured to push the actuating rod 230 into the rest position, in particular in contrast to the pressure in the fourth chamber 240 (which is equal to the pressure in the third chamber 130 which is in turn equal to the pressure in the second chamber 50).

For example, such a spring element 245 can be a compression spring.

In more detail, as better visible in Figure 6, the valve assembly 35 can comprise a clamping sleeve 250 fixed to the valve body 40, at said coupling duct 225 to close the same. More precisely, the clamping sleeve 250 has an annular sleeve, i.e. closed onto itself in a loop, around a central axis that delimits a respective internal cavity extending along said central axis.

Such a clamping sleeve 250 can be rigidly fixed (e.g. screwed) to the valve body 40 (e.g. directly connected to one of said ways thereof), at the coupling duct 225.

In particular, as visible in such Figure 6, the clamping sleeve 250 can have a first portion extending inside the valve body 40, i.e., inside said coupling duct 225, and a second portion partially protruding outside the valve body 40, i.e., outside the coupling duct 225, and closing said coupling duct 225 at one end.

Said end of the actuating rod 230, adapted to contact the switch S for switching off the motor M actuating the pump, inserts (in a fluid-tight manner) into a through hole made in a bottom part of the clamping sleeve 250 so that it protrudes outside the clamping sleeve itself.

A fifth chamber 255 remains defined between the clamping sleeve 250 and said first axial end of the actuating rod 230 provided with said annular sealing gasket 235, in a position opposite the fourth chamber 240.

In practice, said first axial end of the actuating rod 230 with the sealing gasket 235 divides a space made available overall by the clamping sleeve 250 and the coupling duct 225 in said fourth chamber and said fifth chamber, fluid-tightly separating them.

Such an elastic element 245 can then be inserted within the fifth chamber 255 and be included (i.e. interposed) and compressed between the clamping sleeve 250 and the actuating rod 230.

In particular, such a spring element 245 can be inserted in said fifth chamber 255 and have a first axial end placed abutting on an abutment surface made available by the clamping sleeve 250 and an opposite axial end made available by the actuating rod 230, for example made available by a shoulder of the actuating rod 230 defining a localised enlargement thereof.

The fifth chamber 255 is in constant and continuous communication with the first chamber 45, in particular via a communication channel 260, e.g. obtained (dug) in the valve body 40, which opens on one side at the fifth chamber 255 and on the other side at the first chamber 45.

The actuating rod 230 is movable from the rest position to the trigger position, in contrast to the force exerted by the spring element 245 (e.g. Said compression spring), due to the pressure in the fourth chamber 240 (and thus in the third chamber and in the second chamber 50, the fourth chamber 240 being in constant fluid communication therewith).

In particular, the actuating rod 230 is movable from the rest position to the trigger position if the pressure in the fourth chamber 240 (i.e. In the third chamber, i.e. In the second chamber) is greater than the pressure in the fifth chamber 255 (i.e. In the first chamber 45) and the difference in (value of) pressure between the pressure in the fourth chamber 240 (i.e. the third chamber 130, i.e. the second chamber 50) and the pressure in the fifth chamber 255 (i.e. the first chamber 45) is greater than said critical value.

In practice, since the fourth chamber 240 is in constant and continuous fluid communication with the third chamber and thus with the second chamber, and the fifth chamber 255 is in constant and continuous fluid communication with the first chamber, the actuating rod 230 is movable from the rest position to the trigger position if the pressure in the second chamber 50 is greater than the pressure in the first chamber 45 and the difference in (value of) pressure between the pressure in the second chamber 50 and the pressure in the first chamber 45 is greater than said critical value.

Such a critical value (as mentioned above) is less than the threshold value (i.e. whatever the threshold value is, the critical value is less than it).

The operation of the valve assembly 35 described above will be described below starting from the condition in which the motor M actuating the pump 10 is switched off and the pump 10 is stopped.

In this condition, see Figure 2, the first shutter body 60, the second shutter body 125 and the additional shutter body C are all in the respective closed position.

When the actuating motor M is started, the pistons of the pump 10 immediately start pumping at least a small amount of fluid from the intake manifold 25 to the delivery manifold 30.

As the motor M rotation speeds increase, the flow rate of fluid being pumped into the first chamber 45 of the valve assembly 35 also increases.

Part of said fluid obviously goes to fill the fifth chamber 255.

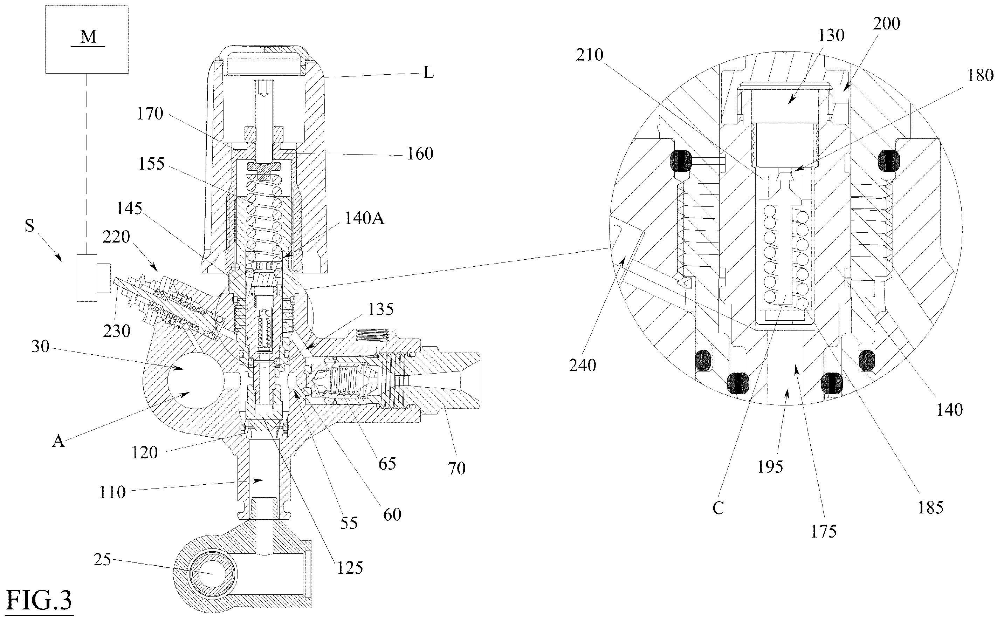

At this point, see Figure 3, the pumped fluid pushes the first shutter body 60 towards the open position, in contrast to the action of the first resilient element 65, thus flowing into the second chamber 50 and from here, possible into the coupling sleeve 70 to reach the outlet duct B, for example towards the dispensing device G from which it exits.

During the dispensing of fluid, part of the fluid reaching the second chamber comes to fill the third chamber 130 and the fourth chamber 240 via the connecting duct 135.

Preferably, the preload of the second resilient element 155 can be regulated in such a way that, during the dispensing of the fluid (i.e. with the first shutter body in the open position) the pressure in the third chamber 130, by virtue of the greater area made available by the plunger 140 in the third chamber 130 than that made available by the same in the first chamber 45, is able to overcome the force exerted on the plunger 140 by the second resilient element 155 and by the pressure in the first chamber 45, so as to at least slightly move the second shutter body 125 away from the second valve seat 115 allowing a smaller part of the fluid pumped by the pump 10 to reach the discharge duct 110.

During such fluid dispensing, the first chamber 45 and the second chamber 50 are essentially placed at the same pressure (i.e. the same pressure value).

Likewise, the third chamber 130 the fourth chamber 240 and the fifth chamber 255 are essentially at the same pressure as the second chamber 50.

Therefore, in such a condition the pressure difference between the second chamber 50 and the first chamber 45 (i.e. the pressure difference between the second chamber and the additional chamber 175) is less than the threshold value, therefore the additional shutter body C remains in the closed position, and furthermore the pressure difference between the second chamber 50 and the first chamber 45 is less than the critical value, therefore the actuating rod 230 remains inactive, i.e. the actuating rod 230 remains in the rest position, therefore the motor M actuating the pump 10 remains switched on and continues to actuate the pump 10.

When the fluid dispensing is terminated, e.g. when the dispensing lance or gun is closed, the fluid being unable to flow until being dispensed, it acts on the first shutter body 60 (assisted by the first resilient element, i.e. the spring) so as to bring it to the closed position.

In this situation, i.e. when the fluid dispensing is terminated (e.g. when the dispensing device G is closed), the pressure value in the various communicating chambers, i.e. in the second chamber 50, in the third chamber 130 and in the fourth chamber 240 increases.

In particular, the pressure value in the second chamber 50, and thus in the third chamber 130 and in the fourth chamber 240, first rises to a value such that the pressure difference between the second chamber 50 and (the fifth chamber, i.e.) the first chamber 45 is greater than the critical value.

At this point, the actuating system 230 is actuated, i.e. the actuating rod 230 moves in contrast to the spring element 245 from the rest position to the trigger position where it presses the switch S for switching off, and switches off the motor M for actuating the pump.

Subsequently, the pressure value in the second chamber 50, and thus in the third chamber 130 and the fourth chamber 240, rises to a value such that the pressure difference between the second chamber 50 and the additional chamber 175, i.e. the pressure difference between the second chamber 50 and the first chamber 45, is greater than the threshold value.

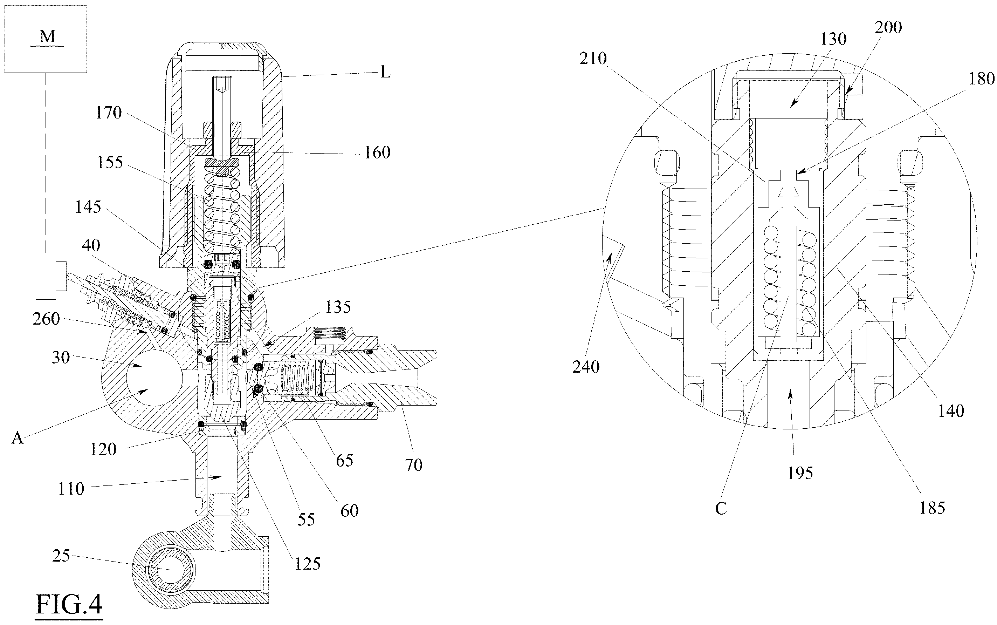

At this point, see Figure 4, the additional shutter body C moves to the respective open position, allowing part of the fluid to flow from the second chamber 50 to the additional chamber, and then to the first chamber 45 (e.g. in particular from the second chamber 50 to the first chamber 45 via the third chamber 130 and the additional chamber 175), and then towards the discharge duct 110, thereby reducing the pressure value in the second chamber 50.

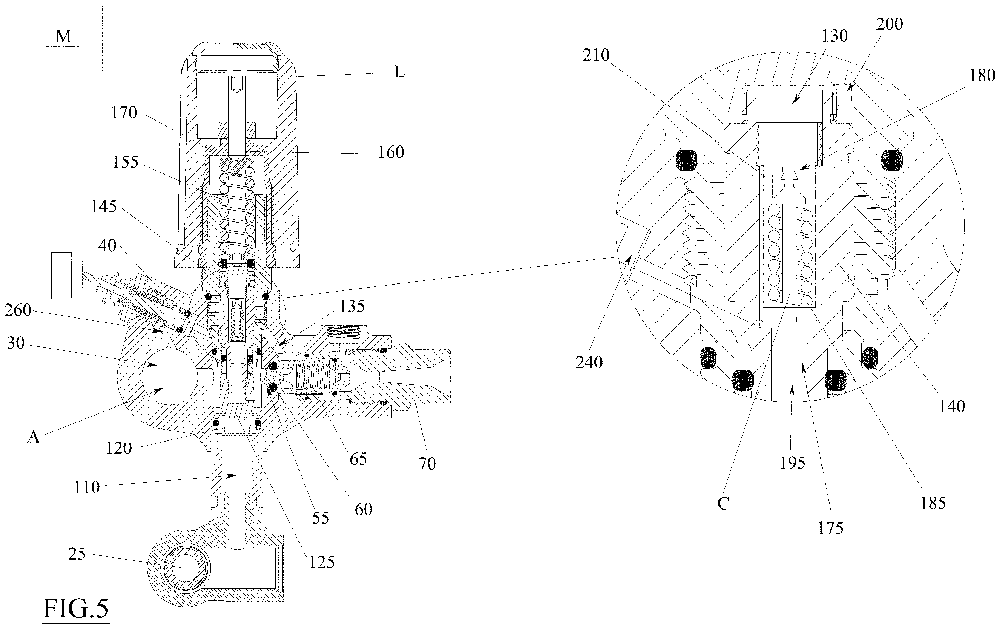

When such a reduction of the pressure value in the second chamber 50 is such that a condition is again reached whereby the pressure difference between (upstream and downstream of the additional shutter body C, i.e. between) the second chamber 50 and the additional chamber 175, i.e., the pressure difference between the second chamber 50 and the first chamber 45, is equal to the threshold value, the additional shutter body C pushed by the additional resilient element 185 returns to the respective closed position (see Figure 5).

It can be seen that in such a condition, the threshold value being greater than the critical value, the pressure in the second chamber 50 is such that the pressure difference between the second chamber 50 and the first chamber 45 is greater than the critical value regardless, so that the actuating system 230 continues to actuate the switch S for switching off the motor M for actuating the pump 10, i.e. the actuating rod 230 remains in the trigger position.

The subsequent demand for dispensing, e.g. by opening the delivery device G by means of a trigger or button, causes a sudden drop in pressure in the second chamber, which communicates with the delivery device via the coupling sleeve and the outlet duct, until a condition whereby the pressure difference between the fourth chamber and the fifth chamber, i.e. between the second chamber 50 and the first chamber 45, settles at a value below the critical value.

In such a condition, the actuating rod will return to the rest position, uncoupling the switch S for switching off the motor M for actuating the pump 10, which will restart and the operation of the pump 10 will resume as described above.

The invention thus conceived is susceptible to many modifications and variants, all falling within the same inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. A valve assembly (35) for pumps (10) comprising:
- a first chamber (45) adapted to be placed in fluid communication with an inlet duct,
- a second chamber (50) communicating with the first chamber (45) via a first valve seat (55), the second chamber (50) being adapted to be placed in fluid communication with an outlet duct,
- a first shutter body (60) housed in the second chamber (50) and movable between a closed position, in which it closes the first valve seat (55), and an open position, in which it opens the first valve seat (55),
- a first resilient element (65) adapted to push the first shutter body (60) towards the closed position in contrast to the pressure present in the first chamber (45),
- an additional chamber (175) in fluid communication with the second chamber (50) via an additional valve seat (180),
- an additional shutter body (C) housed in the additional chamber (175) where it is movable between a closed position, in which it closes the additional valve seat (180), and an open position, in which it opens the additional valve seat (180),
- an additional resilient element (185) adapted to push the additional shutter body (C) towards the closed position,
wherein the additional shutter body (C) is movable, in contrast to the spring force of the additional resilient element (185), from the closed position to the open position if the pressure difference between the second chamber (50) and the additional chamber (175) is greater than a threshold value.

2. The valve assembly (35) according to the preceding claim, wherein this threshold value is greater than the atmospheric pressure value, preferably greater than 25 bar.

3. The valve assembly (35) according to claim 1, wherein the valve assembly comprises a third chamber (130) in continuous fluidic communication with the second chamber (50) and wherein the additional chamber (175) is in fluidic communication with the third chamber (130) via said additional valve seat (180) and in fluidic communication with the second chamber (50) via said additional valve seat (180) and said third chamber (130).

4. The valve assembly (35) according to the preceding claim, further comprising:
- a discharge duct (110) communicating with the first chamber (45) via a second valve seat (115),
- a sliding plunger (140) at least partially delimiting said third chamber (130),
- a second shutter body (125) rigidly connected to the plunger (140) and housed in the first chamber (45) where it is movable between a closed position, in which it closes the second valve seat (115), and an open position, in which it opens the second valve seat (115), and
- a second resilient element (155) adapted to push the second shutter body (125) towards the closed position in contrast to the pressure present in the third chamber (130).

5. The valve assembly (35) according to the preceding claim, wherein said second resilient element (155) is a compression spring, and wherein the valve assembly (35) comprises preload means of the second resilient element (155).

6. The valve assembly (35) according to the preceding claim, wherein this threshold value is independent of the preload value of the second resilient element (155).

7. The valve assembly (35) according to claim 1, wherein said additional chamber (175) is in continuous fluidic communication with the first chamber (45).

8. The valve assembly (35) according to claim 3, comprising an actuating system (230) configured to switch off a motor (M) actuating the pump (10) when the pressure difference between the second chamber (50) and the first chamber (45) is greater than a critical value, the critical value being lower than the threshold value.

9. The valve assembly (35) according to the preceding claim, comprising a fourth chamber (240) in fluidic communication with the second chamber (50), and wherein the actuating system (230) comprises an actuating rod (230) slidably movable within a coupling duct (225) wherein said fourth chamber (240) is defined between a rest position and a trigger position wherein it is adapted to actuate a switch (S) for switching off the motor (M) actuating the pump (10), and a spring element (245) configured to push the actuating rod (230) into the rest position against the pressure in the fourth chamber (240).

10. Pump (10) comprising a valve assembly (35) according to claim 1.
